Europäisches Patentamt

European Patent Office

Office européen des brevets

(19)

(11) Veröffentlichungsnummer: **0 194 960**
**B1**

(12) # EUROPÄISCHE PATENTSCHRIFT

(45) Veröffentlichungstag der Patentschrift:
06.04.88

(51) Int. Cl.⁴: **B 65 G  1/127**

(21) Anmeldenummer: **86730017.0**

(22) Anmeldetag: **31.01.86**

(54) Umlaufregal.

(30) Priorität: **08.02.85 DE 3504751**

(43) Veröffentlichungstag der Anmeldung:
**17.09.86 Patentblatt 86/38**

(45) Bekanntmachung des Hinweises auf die Patenterteilung:
**06.04.88 Patentblatt 88/14**

(84) Benannte Vertragsstaaten:
**AT BE CH DE FR GB IT LI NL SE**

(56) Entgegenhaltungen:
FR-A-2 269 887

(73) Patentinhaber: **Bellheimer Metallwerk GmbH,
D-6729 Bellheim/Pfalz (DE)**

(72) Erfinder: **Schmitz, Joachim, Dipl.- Ing. (FH),
Sonnenweg 12, D-6831 Brühl (DE)**
Erfinder: **Wagner, Franz, Dipl.- Ing., Marktstrasse
5, D-6712 Bobenheim- Roxheim (DE)**
Erfinder: **Siegler, Adrian, Dipl.- Ing. (FH),
Mozartstrasse 23, D-6729 Rülzheim (DE)**

(74) Vertreter: **Böning, Manfred, Dr. Ing.,
Patentanwälte Dipl.- Ing. Dieter Jander Dr. Ing.
Manfred Böning Kurfürstendamm 66, D-1000
Berlin 15 (DE)**

LIBER, STOCKHOLM 1988

## Beschreibung

Die Erfindung betrifft ein Umlaufregal mit einer Vielzahl von zur Aufnahme aufzubewahrender Gegenstände dienenden, längs einer geschlossenen Bahn durch eine von einem Elektroantrieb angetriebene Kette bewegbaren Lastträgern, bei dem der Elektroantrieb gegen die Kraft mindestens eines elastisch verformbaren Widerlagers um begrenzte Beträge schwenkbar gelagert ist.

Aus der FR-A-2 269 887 ist ein Umlaufregal der in Betracht gezogenen Art bekannt, bei dem der Elektromotor mit einer durchgehenden Welle versehen ist, dessen beide Enden in sich gegenüberliegenden Seitenwänden eines Gehäuses pendelnd gelagert sind, wobei elastische Widerlager die Pendelbewegungen begrenzen bzw. dämpfen. Durch die pendelnde Aufhängung des vorzugsweise als Getriebemotor ausgebildeten Elektromotors soll dieser vor unerwünschten Schwingungen bewahrt werden. Eine Möglichkeit zum Erkennen, ob das Regal ungleich oder gar übermäßig beladen ist, bietet die bekannte Konstruktion nicht, wiewohl eine solche Erkennungsmöglichkeit durchaus im Interesse des Anwenders wäre.

Aufgabe der Erfindung ist es, ein Umlaufregal der in Betracht gezogenen Art zu schaffen, bei dem es mit einfachen Mitteln möglich ist, zu erkennen, ob das Regal ungleich oder übermäßig beladen ist. Diese Aufgabe wird erfindungsgemäß dadurch gelöst, daß mindestens ein insbesondere als Grenzwertsensor ausgebildeter Weg-, Winkel- oder Kraftmeßsensor vorgesehen ist, daß der Sensor zum Erfassen der Schwenkbewegungen des Elektroantriebes dient und daß durch den Sensor die vom Elektroantrieb in die Kette eingeleiteten Kräfte begrenzbar sind.

Das erfindungsgemäße Umlaufregal bietet erhebliche Vorteile. Unsymmetrische Belastungen sind erkennbar und folglich ausschaltbar. Auch ein Überladen des Regales läßt sich verhindern, indem man den Sensor so justiert, daß er das Anlaufen des Elektromotors bei Überladung unmöglich macht. Außerdem ist die Gewähr dafür gegeben, daß im Falle von Störungen, z. B. eines Festlaufens infolge eines gebrochenen Bauteiles, der Elektroantrieb automatisch abgeschaltet wird. Schließlich gleichen die elastisch verformbaren Widerlager ruckartige Bewegungen aus, wie sie vornehmlich beim Anlauf der Lastträger von durch einen Drehstrommotor angetriebenen Umlaufregalen auftreten.

Weitere Einzelheiten ergeben sich aus den Unteransprüchen und der nachfolgenden Beschreibung zweier in der beigefügten Zeichnung dargestellter Ausführungsbeispiele. Es zeigen:

Fig. 1 stark schematisiert die Ansicht eines ersten Umlaufregales;

Fig. 2 ebenfalls stark schematisiert die Ansicht eines zweiten Umlaufregales;

Fig. 3 die Motoraufhängung des Umlaufregales gemäß Fig. 2 im vergrößerten Maßstab;

Fig. 4 eine Draufsicht auf die in Fig. 3 dargestellten Teile;

Fig. 5 eine modifizierte Motoraufhängung;

Fig. 6 die Motoraufhängung des Umlaufregales gemäß Fig. 1 im vergrößerten Maßstab mit modifizierter Darstellung der Dämpfung, Kraftmeßsensoren und Grenzwertsensoren und

Fig. 7 eine Draufsicht auf die in Fig. 6 dargestellten Teile mit einer möglichen Zuordnung eines Winkelmeßsensors.

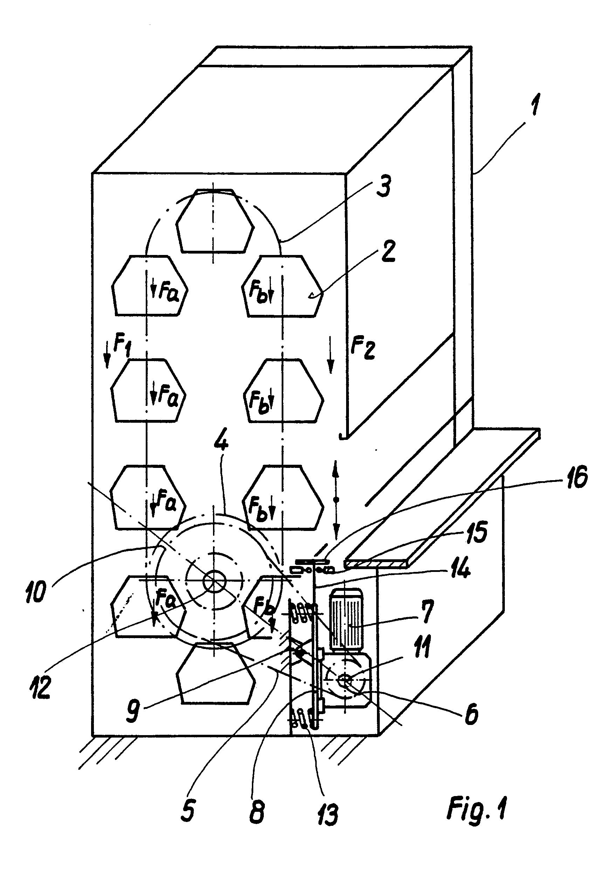

In Fig. 1 ist 1 das Gehäuse eines mit mehreren Lastträgern 2 ausgerüsteten Umlaufregales. Zum Antrieb der Lastträger 2 längs einer Bahn dient eine geschlossene Kette 3, die mit den einzelnen Lastträgern, welche in nicht dargestellten Führungen geführt sind, direkt verbunden ist. Im dargestellten Ausführungsbeispiel steht das Antriebskettenrad 10 für die Kette über eine Antriebskette 5 mit der Abtriebswelle 6 des als Getriebemotor ausgebildeten Elektroantriebes 7 in Verbindung, und zwar über ein auf der Abtriebswelle 6 befestigtes Kettenrad. Der Elektroantrieb 7 ist auf einer Wippe 8 gelagert, die um den Drehpunkt 9 schwenkbar ist. Der Drehpunkt 9 der Wippe 8 liegt bei dem Ausführungsbeispiel gemäß Fig. 1 außerhalb der Längsachse 11 der Abtriebswelle 6 des Elektroantriebes 7.

Die Wippe 8 ist im dargestellten Ausführungsbeispiel als zweiarmiger Hebel ausgebildet, dessen Enden durch von Federelementen gebildete elastische Widerlager 13 abgestützt werden. Der Wippe 8 sind ein Ausleger 14 und ein Zweiwegeschalter zugeordnet, der als Grenzwertsensor 15 dient.

Die Kräfte $F_a$ des linken Teils der Kette 3 bilden eine Resultierende $F_1$ und die Kräfte $F_b$ des rechten Teils eine resultierende $F_2$. Bei gleichmäßig beladenem Umlaufregal sind die Kräfte $F_1$ und $F_2$ gleich, d. h. das vom Elektroantrieb 7 aufzubringende Drehmoment ist gering. Weicht $F_1$ von $F_2$ ab, so muß der Elektroantrieb 7 ein zusätzliches Drehmoment aufbringen, um die Differenzkraft zu überwinden. Ist die Differenzkraft sehr groß, so führt die Wippe 8 eine Schwenkbewegung um ihren Drehpunkt 9 aus, die so groß ist, daß es zu einem Kontakt zwischen der Wippe 8 und dem Zweiwegeschalter 15 kommt. Tritt dieser Fall ein, so wird der Motor 7 automatisch abgeschaltet. Der Zweiwegeschalter 15 bildet mit anderen Worten einen Grenzwertsensor, der auf die maximal zulässige "Unlast" einstellbar ist.

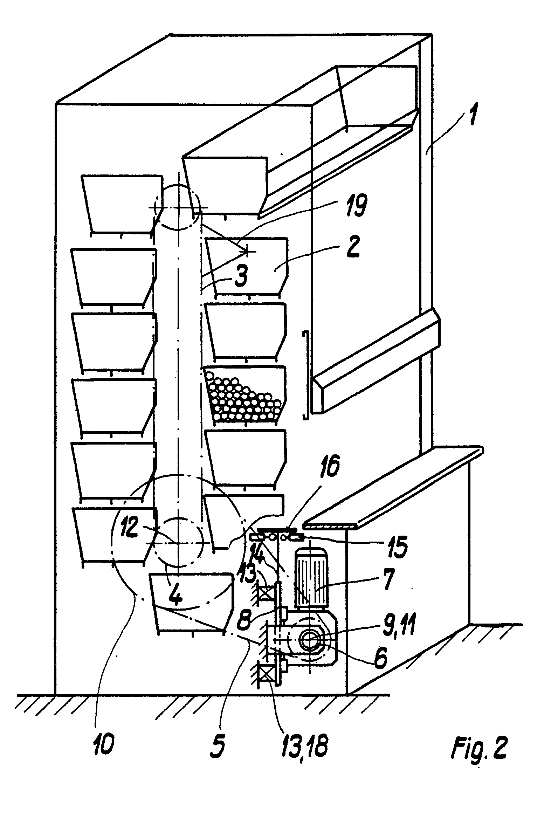

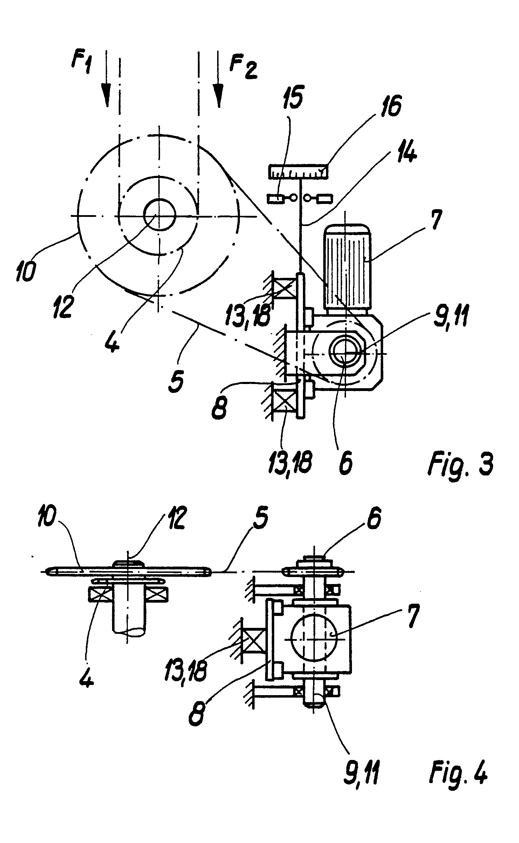

Der Aufbau des in den Fig. 2 - 4 dargestellten Umlaufregales entspricht im wesentlichen dem Aufbau des Umlaufregales gemäß Fig. 1, außer daß der Lastträger 2 indirekt über Tragarme 19 mit der Lastkette 3 verbunden ist. Für gleiche Teile wurden daher die gleichen Bezugszeichen verwendet. Anders als im ersten Ausführungsbeispiel fallen bei dieser Variante der Drehpunkt 9 der Wippe 8 und die Längsachse 11 der Abtriebswelle 6 zusammen. Es ist dies eine besonders vorteilhafte Lösung, da die Antriebskette 5 ihre Lage ständig beibehält. Ein weiterer Unterschied zwischen den beiden Konstruktionen besteht darin, daß beim zweiten Umlaufregal zu den von Federelementen gebildeten Widerlagern 13 Kraftmeßsensoren 18 hinzugekommen sind, die eine Unsymmetrieanzeige des Beladungszustandes ermöglichen.

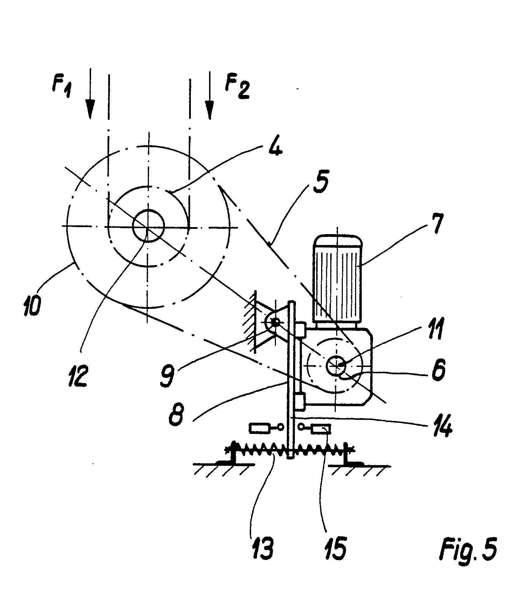

In Fig. 5 schließlich ist ein weiteres Ausführungsbeispiel einer Motoraufhängung dargestellt. In diesem Fall findet eine Wippe 8 Verwendung, die als einarmiger Hebel ausgebildet ist und dessen Ausleger 14 mit dem Schalter 15 zusammenwirkt. Der Ausleger ist zudem zwischen von Federelementen gebildeten Widerlagern 13 geführt. Die Federn können in Gummi eingebettet sein und somit gleichzeitig als Dämpfungselemente wirken. Eine solche Lösung bietet besondere Vorteile bei Verwendung eines Elektroantriebes 7 mit einem Drehstrommotor. Beim Einschalten eines Drehstrommotors erreicht dieser bekanntlich praktisch sofort seine Nenndrehzahl. Dies führt zu ruckartigen Anlaufbewegungen der Lastträger und des Lagergutes im Kurvenbereich. Den ruckartigen Bewegungen wird durch die Dämpfung entgegengewirkt.

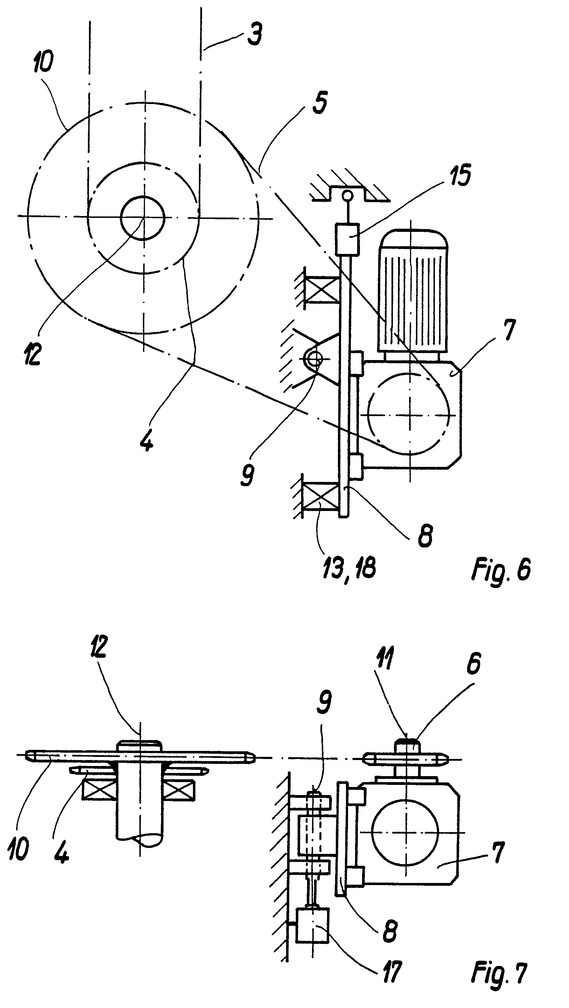

Fig. 6 ist eine weitere Variante eines Grenzwertsensors 15. Dabei ist ein Zweiwegeschalter an der Wippe 8 befestigt. Bewegt sich die Wippe 8 um den Drehpunkt 9 so stark, daß der Grenzwertsensor 15 Kontakt mit dem Begrenzer bekommt, so wird der Motor automatisch abgeschaltet.

Fig. 7 stellt eine weitere Möglichkeit der Meßwerterfassung zur Ermittlung der Unsymmetrie dar. Die Motorwippe 8 ist im Drehpunkt 9 gelagert. Die Drehachse der Motorwippe ist fest mit der Wippe 8 verbunden. Dem Ende der Wippenachse ist ein Winkelmeßsensor 17 zugeordnet, der die Drehbewegung der Welle erfassen kann. Das Meßsignal kann zur Anzeige der Unsymmetrie, zur Richtungsanzeige der Unsymmetrie, zur Überladungsanzeige und zur Bruchstörungsanzeige ausgewertet werden.

**Patentansprüche**

1. Umlaufregal mit einer Vielzahl von zur Aufnahme aufzubewahrender Gegenstände dienenden, längs einer geschlossenen Bahn durch eine von einem Elektroantrieb (7) angetriebene Kette (3) bewegbaren Lastträgern (2), bei dem der Elektroantrieb (7) gegen die Kraft mindestens eines elastisch verformbaren Widerlagers (13) um begrenzte Beträge schwenkbar gelagert ist, dadurch gekennzeichnet, daß mindestens ein insbesondere als Grenzwertsensor ausgebildeter Weg-, Winkel- oder Kraftmeßsensor (15, 16, 17, 18) vorgesehen ist, daß der Sensor zum Erfassen der Schwenkbewegungen des Elektroantriebes (7) dient und daß durch den Sensor die vom Elektroantrieb (7) in die Kette eingeleiteten Kräfte begrenzbar sind.

2. Umlaufregal nach Anspruch 1, dadurch gekennzeichnet, daß der Elektroantrieb (7) auf einer Wippe (8) gelagert ist.

3. Umlaufregal nach Anspruch 2, dadurch gekennzeichnet, daß zur Abstützung der Wippe (8) Kraftmeßsensoren (18) dienen.

4. Umlaufregal nach Anspruch 2 oder 3, dadurch gekennzeichnet, daß zur Abstützung der Wippe (8) Feder- bzw. federnde Dämpfungselemente (13) dienen.

5. Umlaufregal nach einem der Ansprüche 1 bis 4, dadurch gekennzeichnet, daß der Grenzwertsensor als ein in zwei Richtungen wirksamer Schalter (15) ausgebildet ist.

6. Umlaufregal nach einem der Ansprüche 1 bis 5, dadurch gekennzeichnet, daß die Abtriebswelle (6) des Elektroantriebes (7) über eine Antriebskette (5), Zahnräder, Zahnriemen oder Keilriemen mit dem Kettenrad (10) zum Antrieb der Kette (3) für die Lastträger (2) verbunden ist.

7. Umlaufregal nach einem der Ansprüche 1 bis 6, dadurch gekennzeichnet, daß der Elektroantrieb (7) aus einem Elektromotor und einem Getriebe besteht oder nur aus einem Elektromotor.

8. Umlaufregal nach einem der Ansprüche 2 bis 7, dadurch gekennzeichnet, daß der Drehpunkt (9) der Wippe (8) auf der Längsachse (11) der Abtriebswelle (6) des Elektroantriebes (7) liegt.

9. Umlaufregal nach einem der Ansprüche 2 bis 7, dadurch gekennzeichnet, daß der Drehpunkt (9) der Wippe (8) außerhalb der Längsachse (11) der Abtriebswelle (6) des Elektroantriebes (7) liegt.

**Claims**

1. A revolving shelf with a plurality of load carriers (2) serving to hold objects to be stored, which carriers are movable along a closed path by a chain (3) which is driven by an electric drive (7), in which the electric drive (7) is mounted so as to be swivellable by limited amounts against the force of at least one elastically deformable support (13), characterised in that at least one travel-, angle- or force-measuring sensor (15, 16, 17, 18) is provided, which is preferably constructed as a threshold value sensor, that the sensor serves to pick up the swivelling movements of the electric drive (7) and that, through the sensor, the forces introduced into the chain from the electric drive (7) can be limited.

2. A revolving shelf according to Claim 1, characterised in that the electric drive (7) is mounted on a rocker (8).

3. A revolving shelf according to Claim 2, characterised in that force-measuring sensors (18) serve to support the rocker (8).

4. A revolving shelf according to Claim 2 or 3, characterised in that spring elements or, respectively, elastic damping elements (13) serve to support the rocker (8).

5. A revolving shelf according to any one of Claims 1 to 4, characterised in that the threshold value sensor is constructed as a switch (15) which is operable in two directions.

6. A revolving shelf according to any one of Claims 1 to 5, characterised in that the output shaft (6) of the electric drive (7) is connected <u>via</u> a driving chain (5), toothed wheels, toothed belt or V-belt with the chain wheel (10) to drive the chain (3) for the load carriers (2).

7. A revolving shelf according to any one of Claims 1 to 6, characterised in that the electric drive (7) comprises an electric motor and a gear unit or an electric motor only.

8. A revolving shelf according to any one of Claims 2 to 7, characterised in that the point of rotation (9) of the rocker (8) lies on the longitudinal axis (11) of the output shaft (6) of the electric drive (7).

8. A revolving shelf according to any one of Claims 2 to 7, characterised in that the point of rotation (9) of the rocker (8) lies outside the longitudinal axis (11) of the output shaft (6) of the electric drive (7).

**Revendications**

1. Rayonnage tournant comportant plusieurs porte-charge (2) servant à recevoir des objets à conserver, se déplaçant, le long d'une voie fermée, au moyen d'une chaîne (3) entraînée par un entraînement électrique (7), dans lequel l'entraînement électrique (7) est monté de manière à pouvoir pivoter dans une mesure limitée, à l'encontre de la force d'au moins une butée (13) à déformation élastique, caractérisé en ce qu'il est prévu au moins un capteur de mesure de déplacement, d'angle ou de force (15, 16, 17, 18) se présentant en particulier sous la forme d'un capteur de valeur limite, en ce que le capteur sert à enregistrer les déplacements de pivotement du moteur électrique (7) et en ce que les forces introduites dans la chaîne par l'entraînement électrique (7) peuvent être limitées par le capteur.

2. Rayonnage tournant selon la revendication 1, caractérisé en ce que l'entraînement électrique (7) est monté sur une bascule (8).

3. Rayonnage tournant selon la revendication 2, caractérisé en ce que des capteurs de mesure de force (18) servent à soutenir la bascule (8).

4. Rayonnage tournant selon la revendication 2 ou 3, caractérisé en ce que des éléments amortisseurs (13) à ressorts ou élastiques servent à soutenir la bascule (8).

5. Rayonnage tournant selon l'une des revendications 1 à 4, caractérisé en ce que le capteur de valeur limite est un commutateur (15) agissant dans deux directions.

6. Rayonnage tournant selon l'une des revendications 1 à 5, caractérisé en ce que l'arbre de sortie (6) de l'entraînement électrique (7) est relié à la roue à chaîne (10) par une chaîne de transmission (5), des roues dentées (5), des courroies crantées ou des courroies trapézoïdales, pour l'entraînement de la chaîne (3) des porte-charge (2).

7. Rayonnage tournant selon l'une des revendications 1 à 6, caractérisé en ce que l'entraînement électrique (7) est constitué d'un moteur électrique et d'un engrenage ou seulement d'un moteur électrique.

8. Rayonnage tournant selon l'une des revendications 2 à 7, caractérisé en ce que le point de rotation (9) de la bascule (8) repose sur l'axe longitudinal (11) de l'arbre de sortie (6) de l'entraînement électrique(7).

9. Rayonnage tournant selon l'une des revendications 2 à 7, caractérisé en ce que le point de rotation (9) de la bascule (8) se situe à l'extérieur de l'axe longitudinal (11) de l'arbre de sortie (6) de l'entraînement électrique (7).

Fig. 1

Fig. 2

0 194 960

Fig. 3

Fig. 4

Fig. 5

Fig. 6

Fig. 7